(19) Europäisches Patentamt / European Patent Office / Office européen des brevets

(11) **EP 4 692 132 A1**

(12) **EUROPEAN PATENT APPLICATION**
published in accordance with Art. 153(4) EPC

(43) Date of publication:
**11.02.2026 Bulletin 2026/07**

(21) Application number: **24779459.7**

(22) Date of filing: **13.03.2024**

(51) International Patent Classification (IPC):
*C08F 2/50* (2006.01)    *C08K 3/013* (2018.01)
*C08L 101/00* (2006.01)    *C08L 101/08* (2006.01)
*G02B 5/20* (2006.01)

(52) Cooperative Patent Classification (CPC):
C08F 2/50; C08K 3/013; C08L 33/04; C08L 101/00;
C08L 101/08; G02B 5/20

(86) International application number:
**PCT/JP2024/009768**

(87) International publication number:
**WO 2024/203330 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023056995**

(71) Applicant: **Mitsubishi Materials Electronic
Chemicals Co.,
Ltd.
Akita-shi
Akita 010-8585 (JP)**

(72) Inventors:
• **KAGEYAMA Kensuke**
  **Akita-shi, Akita 010-8585 (JP)**
• **AIBA Naoyuki**
  **Akita-shi, Akita 010-8585 (JP)**
• **AKAIKE Hiroto**
  **Naka-shi, Ibaraki 311-0102 (JP)**
• **YAMAGUCHI Tomohiko**
  **Naka-shi, Ibaraki 311-0102 (JP)**

(74) Representative: **Hoffmann Eitle
Patent- und Rechtsanwälte PartmbB
Arabellastraße 30
81925 München (DE)**

(54) **ULTRAVIOLET-CURABLE BLACK RESIN COMPOSITION, BLACK RESIN CURED PRODUCT, MATERIAL FOR MANUFACTURING ELECTRONIC COMPONENT, AND ELECTRONIC COMPONENT**

(57)    Provided are: an ultraviolet-curable black resin composition including a black pigment, a photopolymerizable compound, and a photopolymerization initiator, in which $\varepsilon'(\lambda)$ at a wavelength of $\lambda$ nm is defined as $\varepsilon'(\lambda) = OD(\lambda)/(c \times 1)$, where $OD(\lambda)$ is an optical density at the wavelength of $\lambda$ nm, c is a pigment concentration, and 1 is an optical path length, and a ratio $\varepsilon'(550)/\varepsilon'(365)$ of $\varepsilon'(550)$ for light at a wavelength of 550 nm to $\varepsilon'(365)$ for light at a wavelength of 365 nm is set to a range of 1.00 to 2.00; a black resin cured product; and a material for manufacturing an electronic component and an electronic component, both including the above-described ultraviolet-curable black resin composition and black resin cured product.

**Description**

TECHNICAL FIELD

This invention relates to an ultraviolet-curable black resin composition, a black resin cured product, a material for manufacturing an electronic component, and an electronic component.

Priority is claimed on Japanese Patent Application No. 2023-056995, filed March 31, 2023, the content of which is incorporated herein by reference.

BACKGROUND ART

For example, an ultraviolet-curable black resin composition containing a black pigment is used as a black matrix for a display device (display) composed of a liquid crystal or organic EL, a light-shielding material for a C image sensor, a light-shielding material for an optical member, a light-shielding filter, an infrared (IR) cut filter, a coverlay film, a light-shielding film for an electronic component, a black film, a UV-curable adhesive, and the like.

For example, Patent Document 1 discloses a sealant composition for a liquid crystal display element, which has high light-shielding properties against visible light and also high photocurability against ultraviolet light, and which contains zirconium nitride as a black pigment, a curable compound, and a photopolymerization initiator.

Citation List

Patent Document

Patent Document 1: Japanese Unexamined Patent Application, First Publication No. 2020-076794(A)

SUMMARY OF INVENTION

Technical Problem

In the sealant composition for a liquid crystal display element disclosed in Patent Document 1, as described in examples, it was necessary to use thermal curing in combination because photocuring alone was insufficient in terms of curability. That is, in Patent Document 1, the photocurability by ultraviolet light was insufficient.

This invention has been made in view of the above-described circumstances, and an object thereof is to provide an ultraviolet-curable black resin composition having excellent light-shielding properties with respect to visible light and excellent photocurability by ultraviolet light, a black resin cured product, as well as a material for manufacturing an electronic component and an electronic component, both including the above-described ultraviolet-curable black resin composition and black resin cured product.

Solution to Problem

The present inventors have conducted extensive studies in order to solve the above-described problem, and as a result, have obtained the following findings.

By defining a new constant $\varepsilon'(\lambda)$ as $\varepsilon'(\lambda) = OD(\lambda)/(c \times 1)$, where $OD(\lambda)$ is an optical density of light at a wavelength of $\lambda$ nm, c is a pigment concentration (g/L), and 1 is an optical path length (cm), it becomes possible to treat $\varepsilon'(\lambda)$ as a general-purpose constant dependent on the concentration and the optical path length. Then, by setting a ratio of $\varepsilon'(550)$ at a wavelength of 550 nm, which affects light-shielding properties, to $\varepsilon'(365)$ at a wavelength of 365 nm, which affects ultraviolet curing, within an appropriate range, it becomes possible to achieve a well-balanced combination of light-shielding properties with respect to visible light and photocurability by ultraviolet light.

An ultraviolet-curable black resin composition according to aspect 1 of the present invention has been made based on the above-described findings, and is an ultraviolet-curable black resin composition including: a black pigment, a photopolymerizable compound, and a photopolymerization initiator, in which $\varepsilon'(\lambda)$ for light at a wavelength of $\lambda$ nm is defined as $\varepsilon'(\lambda) = OD(\lambda)/(c \times 1)$, where $OD(\lambda)$ is an optical density of light at the wavelength of $\lambda$ nm, c is a pigment concentration (g/L), and 1 is an optical path length (cm), and a ratio $\varepsilon'(550)/\varepsilon'(365)$ of $\varepsilon'(550)$ for light at a wavelength of 550 nm to $\varepsilon'(365)$ for light at a wavelength of 365 nm is set to a range of 1.00 to 2.00.

According to the ultraviolet-curable black resin composition of aspect 1 of the present invention, $\varepsilon'(\lambda)$ for light at a wavelength of $\lambda$ nm is defined as $\varepsilon'(\lambda) = OD(\lambda)/(c \times 1)$, where $OD(\lambda)$ is an optical density of light at the wavelength of $\lambda$ nm, c is a pigment concentration (g/L), and 1 is an optical path length (cm), and a ratio $\varepsilon'(550)/\varepsilon'(365)$ of $\varepsilon'(550)$ for light at a wavelength of 550 nm to $\varepsilon'(365)$ for light at a wavelength of 365 nm is set to a range of 1.00 to 2.00, so that excellent light-shielding properties with respect to visible light and excellent photocurability by ultraviolet light are achieved.

In the ultraviolet-curable black resin composition of aspect 2 of the present invention, based on the ultraviolet-curable black resin composition of aspect 1 of the present invention, the photopolymerizable compound is structured to have a carboxyl group in a repeating unit within a molecule or at a molecular terminal.

According to the ultraviolet-curable black resin composition of aspect 2 of the present invention, since the photopolymerizable compound is structured to have a carboxyl group in a repeating unit within a molecule or at a molecular terminal, particle dispersibility is improved, and it becomes possible to improve optical properties.

In the ultraviolet-curable black resin composition of aspect 3 of the present invention, based on the ultraviolet-curable black resin composition of aspect 1 or 2 of the present invention, a mass ratio X/Y of a content X of the black pigment to a content Y of the photopolymerization initiator is set to a range of 0.3 to 10.

According to the ultraviolet-curable black resin composition of aspect 3 of the present invention, since a mass ratio X/Y of a content X of the black pigment to a content Y of the photopolymerization initiator is set to a range of 0.3 to 10, the above-described ratio $\varepsilon'(550)/\varepsilon'(365)$ can be stably adjusted to a range of 1.00 to 2.00.

The black resin cured product of aspect 4 of the present invention is a cured product of the ultraviolet-curable black resin composition according to any one of aspects 1 to 3 of the present invention.

According to the black resin cured product of aspect 4 of the present invention, since it is a cured product of the ultraviolet-curable black resin composition according to any one of aspects 1 to 3 of the present invention, it has sufficiently excellent light-shielding properties and sufficient hardness, and is particularly suitable as a light-shielding member.

A material for manufacturing an electronic component according to aspect 5 of the present invention includes: at least one or both of the ultraviolet-curable black resin composition according to any one of aspects 1 to 3 of the present invention and a black resin cured product obtained by curing the ultraviolet-curable black resin composition according to any one of aspects 1 to 3 of the present invention.

According to the material for manufacturing an electronic component of aspect 5 of the present invention, since it includes the ultraviolet-curable black resin composition having excellent light-shielding properties with respect to visible light and excellent photocurability by ultraviolet light and the black resin cured product which is a cured product of the composition, it is possible to manufacture an electronic component having various excellent properties.

An electronic component according to aspect 6 of the present invention includes: at least one of both of the ultraviolet-curable black resin composition according to any one of aspects 1 to 3 of the present invention and a black resin cured product obtained by curing the ultraviolet-curable black resin composition according to any one of aspects 1 to 3 of the present invention.

According to the electronic component of aspect 6 of the present invention, since it includes the ultraviolet-curable black resin composition having excellent light-shielding properties with respect to visible light and excellent photocurability by ultraviolet light and the black resin cured product which is a cured product of the composition, it has various excellent properties.

Advantageous Effects of Invention

According to the present invention, it is possible to provide an ultraviolet-curable black resin composition having excellent light-shielding properties with respect to visible light and excellent photocurability by ultraviolet light, a black resin cured product, as well as a material for manufacturing an electronic component and an electronic component, both including the above-described ultraviolet-curable black resin composition and black resin cured product.

DESCRIPTION OF EMBODIMENT

Hereinafter, an embodiment of the present invention will be described. Each embodiment shown below is specifically described to facilitate better understanding of the gist of the invention, and does not limit the present invention unless otherwise specified.

An ultraviolet-curable black resin composition according to the present embodiment includes: a black pigment; a photopolymerizable compound; and a photopolymerization initiator.

Moreover, $\varepsilon'(\lambda)$ for light at a wavelength of $\lambda$ nm is defined as $\varepsilon'(\lambda) = OD(\lambda)/(c \times 1)$, where $OD(\lambda)$ is an optical density of light at the wavelength of $\lambda$ nm, c is a pigment concentration (g/L), and 1 is an optical path length (cm), and a ratio $\varepsilon'(550)/\varepsilon'(365)$ of $\varepsilon'(550)$ for light at a wavelength of 550 nm to $\varepsilon'(365)$ for light at a wavelength of 365 nm is set to a range of 1.00 to 2.00.

The optical density OD is expressed by the following Equation (1) using the transmittance T. It can be understood from Equation (1) that the higher the value of the optical density OD, the better the light-shielding properties.

$$\text{Equation (1): } OD(\lambda) = \log_{10}[1/T(\lambda)]$$

Next, the absorbance A is expressed by the following Equation (2). In Equation (2), ε is a molar absorption coefficient (L/cm/g), c is a particle concentration (g/L), and 1 is an optical path length (cm).

$$\text{Equation (2): } A = \log_{10}[1/T] = \varepsilon \times c \times 1$$

From Equations (1) and (2), since the definitions of the optical density OD and the absorbance A are substantially equivalent, OD can be regarded as being in a proportional relationship with $\varepsilon \times c \times 1$. Therefore, a new constant ε' is defined as in the following Equation (3). This constant ε' can be treated as a general-purpose constant independent of the particle concentration or the optical path length.

$$\text{Equation (3): } \varepsilon'(\lambda) = OD/(c \times 1)$$

In the ultraviolet-curable black resin composition according to the present embodiment, a ratio ε'(550)/ε'(365) of ε'(550) at a wavelength of 550 nm, which affects light-shielding properties, to ε'(365) at a wavelength of 365 nm, which affects ultraviolet curing, is set to a range of 1.00 to 2.00.

When ε'(550)/ε'(365) is less than 1.00, ultraviolet light is less likely to be sufficiently transmitted, resulting in insufficient ultraviolet curing, which may lead to insufficient shielding performance against visible light. On the other hand, when ε'(550)/ε'(365) exceeds 2.00, the sensitivity of the photopolymerization initiator to ultraviolet light decreases, resulting in insufficient ultraviolet curing, which may lead to insufficient shielding performance against visible light.

ε'(550)/ε'(365) is preferably 1.20 or more, and more preferably 1.40 or more. In addition, ε'(550)/ε'(365) is preferably 1.80 or less, and more preferably 1.70 or less.

In addition, the above-described ε'(λ) is specified based on the concentration c (g/L) of the black pigment, but since the photopolymerization initiator also contributes to light-shielding properties, sufficient light-shielding properties can be ensured even when ε'(550)/ε'(365) is 1.00 or less.

Here, the value of the above-described ratio ε'(550)/ε'(365) can be controlled by adjusting the concentration ratio between the black pigment and the photopolymerization initiator.

In the present embodiment, a mass ratio X/Y of a content X of the black pigment to a content Y of the photopolymerization initiator is set to a range of 0.2 to 20. Although not particularly limited, the mass ratio X/Y of the content X of the black pigment to the content Y of the photopolymerization initiator may be 0.3 to 10.

Next, the photopolymerizable compound, the photopolymerization initiator, and the black pigment contained in the ultraviolet-curable black resin composition according to present embodiment will be described.

As the photopolymerizable compound contained in the ultraviolet-curable black resin composition according to the present embodiment, a radical polymerizable compound, a cationic polymerizable compound, or an anionic polymerizable compound can be used. For example, as the radically polymerizable compound, it is possible to use a monomer or oligomer having an ethylenically unsaturated bond, or a polyfunctional monomer having three or more ethylenically unsaturated bonds.

The monomer having an ethylenically unsaturated bond may be an acrylic monomer having one or more (meth) acryloyl groups. Examples of acrylic monomers include (meth)acrylic monofunctional monomers, for example, monofunctional monomers such as (meth)acrylic acid, methyl (meth)acrylate, ethyl (meth)acrylate, propyl (meth)acrylate, n-butyl (meth)acrylate, isobutyl (meth)acrylate, 2-ethylhexyl (meth)acrylate, octyl (meth)acrylate, isooctyl (meth)acrylate, isodecyl (meth)acrylate, lauryl (meth)acrylate, stearyl (meth)acrylate, benzyl (meth)acrylate, phenyl (meth)acrylate, phenoxyethyl (meth)acrylate, 2-hydroxyethyl (meth)acrylate, 2-hydroxypropyl (meth)acrylate, isoamyl acrylate, N,N-dimethylacrylamide, 4-acryloylmorpholine, tetrahydrofurfuryl (meth)acrylate, isobornyl (meth)acrylate, cyclic trimethylolpropane formal (meth)acrylate, and (2-ethyl-2-methyl-1,3-dioxolan-4-yl)methyl (meth)acrylate, and difunctional monomers such as 1,6-hexanediol di(meth)acrylate, 1,9-nonanediol di(meth)acrylate, neopentyl glycol di(meth)acrylate, polyethylene glycol di(meth)acrylate, ethylene oxide-modified bisphenol A di(meth)acrylate, and neopentyl triethylene glycol di(meth)acrylate.

The oligomer having an ethylenically unsaturated bond may be an acrylic oligomer having two or more (meth) acryloyl groups. The acrylic oligomer is a low molecular weight polymer formed by polymerization of an acrylic monofunctional monomer. Examples of the acrylic oligomer include acrylic (meth)acrylate, urethane (meth)acrylate, epoxy (meth)acrylate, and polyester (meth)acrylate. The molecular weight of the acrylic oligomer may be, for example, in a range of 300 to 10,000 in terms of number average molecular weight.

The above-described (meth)acrylate monomers and oligomers can be used alone or in combination of two or more thereof. **In** addition, the acrylic oligomer is not limited to those described above, and generally available oligomers can be used. The polyfunctional monomer having ethylenically unsaturated bonds may be an acrylic polyfunctional monomer having three or more (meth)acryloyl groups. Examples of the acrylic polyfunctional monomer include pentaerythritol tri(meth)acrylate, pentaerythritol tetra(meth)acrylate, and trimethylolpropane tri(meth)acrylate.

Examples of the cationic polymerizable compound include an epoxy compound and an oxetane compound. The epoxy compound is not particularly limited as long as it is a compound having a reactive epoxy group, and examples thereof include epoxy monomers, bisphenol A-type epoxy, bisphenol F-type epoxy, biphenyl-type epoxy, biphenyl-mixed-type epoxy, naphthalene-type epoxy, cresol novolac-type epoxy, dicyclopentadiene-type epoxy, trisphenol ethane-type epoxy, tetraphenol ethane-type epoxy, aliphatic epoxy, and alicyclic epoxy.

Specific examples of epoxy monomers include n-butyl glycidyl ether, 2-ethylhexyl glycidyl ether, lauryl glycidyl ether, 1,4-butanediol diglycidyl ether, neopentyl glycol diglycidyl ether, 1,6-hexanediol diglycidyl ether, allyl glycidyl ether, ethylene glycol diglycidyl ether, resorcinol diglycidyl ether, polypropylene glycol glycidyl ether, 1,4-cyclohexanedimethanol diglycidyl ether, hydrogenated bisphenol A diglycidyl ether, 1,2;5,6-diepoxyhexahydroindane, 3',3'-epoxycyclohexylmethyl-3,4-epoxycyclohexanecarboxylate, and 1,2-epoxy-4-vinylcyclohexane.

Examples of the oxetane compound include 2-ethylhexyl oxetane, 3-ethyl-3-(hydroxymethyl)oxetane, 3-ethyl-3-(4-hydroxybutyloxymethyl)oxetane, 3-ethyl-3-[(phenoxy)methyl]oxetane, 3-ethyl-3-(hexyloxymethyl)oxetane, 3,3'-(oxybismethylene)bis(3-ethyloxetane), 3-ethyl-3-(2-ethylhexyloxymethyl)oxetane, (3-ethyl-3-oxetanyl)methyl methacrylate, 4,4'-bis[(3-ethyl-3-oxetanyl)methoxymethyl]biphenyl, bis[(3-ethyl-3-oxetanyl)methyl] isophthalate, 3-ethyl-3-([(3-ethyloxetane-3-yl)methoxy]methyl)oxetane, 1,6-bis(3-ethyl-3-oxetanylmethoxy)hexane, 1,3-bis[(3-ethyl-3-oxetanylmethoxy)methyl], and oligomers obtained by partially polymerizing these compounds.

The content of the photopolymerizable compound is preferably set to, for example, a range of 5 parts by mass to 99 parts by mass per 100 parts by mass of the ultraviolet-curable black resin composition.

Here, in the present embodiment, it is preferable that the photopolymerizable compound have a structure with a carboxyl group in a repeating unit within a molecule or at a molecular terminal.

By using the photopolymerizable compound having a carboxyl group within a molecule, the dispersibility of particles is improved.

The photopolymerization initiator contained in the ultraviolet-curable black resin composition according to the present embodiment is preferably a compound capable of absorbing ultraviolet light, specifically light with a wavelength of 100 to 400 nm, and initiating a polymerization reaction.

The content of the photopolymerization initiator is preferably set to, for example, a range of 0.5 parts by mass to 15 parts by mass per 100 parts by mass of the ultraviolet-curable black resin composition.

The photopolymerization initiator contained in the ultraviolet-curable black resin composition according to the present embodiment may be, for example, a radical generator or a photoacid generator. Examples of the ultraviolet curing agent that can be used include acetophenone-based compounds, benzophenone-based compounds, benzoin ether-based compounds, triazine compounds, phosphine oxide-based compounds, sulfonium-based compounds, iodonium-based compounds, and organic peroxides.

Examples of acetophenone-based compounds include acetophenone, dimethylacetophenone, 2-hydroxy-2-methylpropiophenone, 2-methyl-1-[4-(methylthio)phenyl]-2-morpholinopropan-1-one, and 2-benzyl-2-dimethylamino-1-(4-morpholinophenyl)-butanone-1. Examples of benzophenone-based compounds include benzophenone and 2-chlorobenzophenone. Examples of benzoin ether-based compounds include benzoin and benzoin methyl ether. Examples of phosphine oxide-based compounds include bis(2,4,6-trimethylbenzoyl)phenylphosphine oxide and 2,4,6-trimethylbenzoyl-diphenylphosphine oxide. Examples of sulfonium-based compounds include triphenylsulfonium tetrafluoroborate, tri-p-tolylsulfonium trifluoromethanesulfonate, diphenyl[4-(phenylthio)phenyl]sulfonium hexafluoroantimonate, and diphenyl[4-(phenylthio)phenyl]sulfonium hexafluorophosphate. Examples of iodonium-based compounds include bis(4-tert-butylphenyl)iodonium hexafluorophosphate and diphenyliodonium hexafluorophosphate. Examples of organic peroxides include benzoyl peroxide and cumene peroxide.

The ultraviolet-curable black resin composition according to the present embodiment may contain an organic solvent as a diluent. Examples of organic solvents include: glycol ethers such as ethyl carbitol, ethyl carbitol acetate, butyl carbitol acetate (BCA), butyl carbitol, methyl cellosolve, ethyl cellosolve, diethylene glycol ethyl methyl ether, propylene glycol monomethyl ether, propylene glycol monomethyl ether acetate (PGMEA), propylene glycol monoethyl ether, dipropylene glycol monomethyl ether, dipropylene glycol monoethyl ether, triethylene glycol monomethyl ether, and triethylene glycol monoethyl ether; α-terpineol; methyl ethyl ketone (MEK); ethyl acetate; butyl acetate; n-propanol; isopropanol; methanol; ethanol; and toluene.

The ultraviolet-curable black resin composition according to the present embodiment may contain a plasticizer as a diluent. Examples of plasticizers include phosphate ester-based plasticizers, phthalate ester-based plasticizers, aliphatic-basic ester-based plasticizers, aliphatic dibasic acid ester-based plasticizers, dihydric alcohol ester-based plasticizers, and oxyacid ester-based plasticizers. Examples of phosphate ester-based plasticizers include tributyl phosphate and 2-ethylhexyl phosphate. Examples of phthalate ester-based plasticizers include dimethyl phthalate and dibutyl phthalate. Examples of aliphatic-basic ester-based plasticizers include butyl oleate and glycerin monooleate. Examples of aliphatic dibasic acid ester-based plasticizers include dibutyl adipate and di(2-ethylhexyl)sebacate. Examples of dihydric alcohol ester-based plasticizers include diethylene glycol dibenzoate and triethylene glycol di-2-ethylbutyrate. Examples of oxyacid ester-based plasticizers include methyl acetyl ricinoleate and tributyl acetyl citrate.

The black pigment contained in the ultraviolet-curable black resin composition according to the present embodiment is designed to include black particles.

The content of the black pigment varies in its optimal value depending on the desired thickness of the black resin cured product and is not limited, but may be, for example, in a range of 0.001 parts by mass to 60 parts by mass, in a range of 1 part by mass to 40 parts by mass, or in a range of 5 parts by mass to 20 parts by mass per 100 parts by mass of the ultraviolet-curable black resin composition.

Examples of black particles include zirconium nitride-based particles, carbon black, titanium black, and iron oxide. Zirconium nitride particles preferably contain 80 mass% or more of zirconium nitride, more preferably 90 mass% or more. In addition, zirconium nitride-based particles may contain oxygen and may contain metal elements other than zirconium. Although not particularly limited, the oxygen content may be 1 mass% or more or 10 mass% or more. In addition, although not particularly limited, the content of metal elements other than zirconium may be 0.1 mass% or more or 1.0 mass% or more.

The type of carbon black is not particularly limited, and commercially available products produced by general production methods such as the furnace method, acetylene method, or channel method can be used. Carbon black that has been surface-treated to improve affinity with components in the composition is particularly preferable.

For titanium black, products or the like manufactured by Mitsubishi Materials Electronic Chemicals Co., Ltd. can be used. Specifically, 13M, 13M-C, 13M-T, 12S, UF-8, and the like can be used.

The measurement of the particle diameter of black particles using TEM can be performed, for example, as follows. A black dispersion is added dropwise onto a substrate and dried to obtain a sample for TEM observation. The obtained sample is observed using TEM, and the primary particle diameter of 500 black particles is measured. The particle diameter is defined as the maximum Feret diameter. Using the obtained particle diameter, a volume-based cumulative undersize distribution is created under the assumption that the particles are perfect spheres. From the obtained cumulative undersize distribution, the particle diameter at which the cumulative distribution reaches 50% (50% cumulative distribution diameter) and the particle diameter at which the cumulative distribution reaches 90% (90% cumulative distribution diameter) are read.

The 50% cumulative distribution diameter (D50) of black particles measured using the dynamic light scattering method may be in a range of 30 nm to 120 nm, or in a range of 40 nm to 100 nm. The 90% cumulative distribution diameter (D90) of black particles measured using the dynamic light scattering method may be 200 nm or less, and more preferably in a range of 60 nm to 150 nm. The cumulant diameter measured using dynamic light scattering light may be in a range of 60 nm to 140 nm. In the volume-based cumulative undersize distribution of black particles measured using the dynamic light scattering method, the content of black particles with a diameter of 300 nm or more may be 1% or less, and the content of black particles with a diameter of 250 nm or more may be 5% or less.

In addition, the ultraviolet-curable black resin composition according to the present embodiment may contain, besides the photopolymerizable compound, photopolymerization initiator, and black pigment, a plasticizer and other additives (such as a surfactant and a leveling agent).

Next, a method for producing the ultraviolet-curable black resin composition according to the present embodiment will be described.

First, a black dispersion is prepared by dispersing a black pigment in a solvent. As the solvent, monomers having a reactive functional group within a molecule, water, and organic solvents can be used. Examples of monomers having a reactive functional group within a molecule include (meth)acrylic monomers having a (meth)acryloyl group, epoxy monomers having an oxirane ring such as an epoxy group or glycidyl group, vinyl monomers having a vinyl group or vinyl ether group, and oxetane monomers having an oxetanyl group.

Regarding the viscosity of the solvent, it is preferable to use a low-viscosity solvent with a viscosity of 100 Pa·s or less at 25°C from the viewpoint of enhancing the dispersion efficiency of the black pigment.

Here, the black dispersion may contain a dispersant. As the dispersant, for example, an organic substance having a group with affinity for the black pigment (adsorbing functional group) and a structure with steric hindrance can be used.

Examples of groups with affinity for the black pigment (adsorbing functional groups) include a secondary amine group, a tertiary amine group, a carboxylic acid group, a phosphoric acid group, and a phosphate ester group. As the dispersant, a polymeric dispersant with a number average molecular weight ranging from several hundred to several tens of thousands, a silane coupling agent such as organotriethoxysilane or organotrimethoxysilane, a titanate coupling agent, or the like can be used.

The structure with steric hindrance is not particularly limited, and an alkyl chain, a polyethylene glycol chain, a polypropylene glycol chain, a polyether chain, or the like can be used. As the structure of the dispersant, a structure in which a sterically hindering structure extends linearly from a single adsorbing functional group or a comb-like structure in which graft chains extend in a comb-like manner from multiple adsorptions can be employed.

The black dispersion can be produced, for example, by mixing a solvent, a black pigment, and a dispersant, and subjecting the resulting mixture to a dispersion treatment. As a dispersion treatment apparatus, a paint shaker, a bead mill, an ultrasonic disperser, or the like can be used.

The black dispersant obtained as described above, a photopolymerizable compound, and a photopolymerization initiator are mixed together. The mixing method is not particularly limited, and for example, a mixing apparatus such as a planetary mixer, a three-roll mill, of a kneader can be used for mixing.

In this manner, the ultraviolet-curable black resin composition according to the present embodiment is produced.

The black resin cured product according to the present embodiment is obtained by curing the ultraviolet-curable black resin composition according to the present embodiment described above.

To obtain the black resin cured product according to the present embodiment, for example, the ultraviolet-curable black resin composition according to the present embodiment is applied onto a substrate to form a coated film. Next, the coated film is irradiated with ultraviolet light to polymerize the photopolymerizable compound. As the ultraviolet light source, a halogen lamp, a metal halide lamp, a UV-LED, or the like can be used, and there is no particular limitation as long as the light source has a wavelength matching the absorption wavelength of the photopolymerization initiator.

A material for manufacturing an electronic component and an electronic component according to the present embodiment include at least one or both of the ultraviolet-curable black resin composition according to the present embodiment and the black resin cured product obtained by curing the ultraviolet-curable black resin composition according to the present embodiment.

Specific examples of the material for manufacturing an electronic component and electronic component include a black matrix and a black column spacer for color filters, a CMOS camera module, a sealing material for liquid crystal display elements, a partition wall material for micro-LEDs, a semiconductor encapsulant, an underfill material, a black paste for circuit concealment, a light-shielding solder resist, an ultraviolet-curable black ink, and an optical adhesive.

According to the ultraviolet-curable black resin composition of the present embodiment configured as described above, $\varepsilon'(\lambda)$ for light at a wavelength of $\lambda$ nm is defined as $\varepsilon'(\lambda) = OD(\lambda)/(c \times 1)$, where $OD(\lambda)$ is an optical density of light at the wavelength of $\lambda$ nm, c is a pigment concentration (g/L), and 1 is an optical path length (cm), and a ratio $\varepsilon'(550)/\varepsilon'(365)$ of $\varepsilon'(550)$ for light at a wavelength of 550 nm to $\varepsilon'(365)$ for light at a wavelength of 365 nm is set to a range of 1.00 to 2.00, so that excellent light-shielding properties with respect to visible light and excellent photocurability by ultraviolet light are achieved.

Here, in the ultraviolet-curable black resin composition of the present embodiment, when the photopolymerizable compound is structured to have a carboxyl group in a repeating unit within a molecule or at a molecular terminal, particle dispersibility is improved, and it becomes possible to further improve optical properties.

In the ultraviolet-curable black resin composition according to the present embodiment, when a mass ratio X/Y of a content X of the black pigment to a content Y of the photopolymerization initiator is set to a range of 0.3 to 20, more preferably set to a range of 0.3 to 10, the above-described ratio $'(550)/\varepsilon'(365)$ can be stably adjusted to a range of 1.00 to 2.00.

The black resin cured product according to the present embodiment, being the ultraviolet-curable black resin composition according to the present embodiment, exhibits sufficiently excellent light-shielding properties and sufficient hardness, making it particularly suitable as a light-shielding member.

According to the material for manufacturing an electronic component and the electronic component of the present embodiment, since at least one or both of the ultraviolet-curable black resin composition according to the present embodiment and the black resin cured product obtained by curing the ultraviolet-curable black resin composition according to the present embodiment are included, it is possible to provide an electronic component having various excellent properties.

Although one embodiment of the present invention has been described above, the present invention is not limited thereto and can be appropriately modified within a scope that does not depart from the technical concept of the invention.

Examples

A verification experiment conducted to confirm the effectiveness of the present invention will be described.

(Example 1 of the present invention)

20 parts by mass of a black pigment primarily composed of zirconium nitride, prepared according to Example 1 in Japanese Unexamined Patent Application, First Publication No. 2019-160829, 2 parts by mass of a phosphate-based comb-shaped polymer as a dispersant (a content of 10 mass% relative to the black pigment), and benzyl acrylate as a photopolymerizable compound 1 were weighed out in an amount such that the total amount of all components was 100 parts by mass. The weighed out components were dispersed and mixed in a bead mill using zirconia beads with a diameter of 0.3 mm for a residence time of 15 minutes to produce a black dispersion. In the obtained black dispersion, the content of zirconium nitride particles is 20 mass%.

10 parts by mass of the obtained black dispersion, 89 parts by mass of a polyester acrylate having a carboxyl group in its structure (EBERCRYL 450, manufactured by Daicel-Allnex Ltd.) as a photopolymerizable compound 2, and 1 part by mass of bis(2,4,6-trimethylbenzoyl)phenylphosphine oxide as a photopolymerization initiator were weighed out in the above proportions, and mixed and defoamed at 1,000 rpm for 3 minutes or longer using a planetary mixer (Awatori Rentaro, manufactured by Thinky Corporation) to produce the ultraviolet-curable black resin composition of Example 1 of the present invention.

The obtained ultraviolet-curable black resin composition had a black pigment content of 2 mass%, a photopolymerization initiator content of 1 mass%, and a photopolymerizable compound content of 89 mass%.

(Example 2 of the present invention)

20 parts by mass of a black pigment primarily composed of zirconium nitride, prepared according to Example 1 in Japanese Unexamined Patent Application, First Publication No. 2019-160829, 2 parts by mass of a phosphate-based comb-shaped polymer as a dispersant (a content of 10 mass% relative to the black pigment), and isobornyl acrylate as a photopolymerizable compound 1 were weighed out in an amount such that the total amount of all components was 100 parts by mass. The weighed out components were dispersed and mixed in a bead mill using zirconia beads with a diameter of 0.3 mm for a residence time of 15 minutes to produce a black dispersion A. In the obtained black dispersion, the content of zirconium nitride particles is 20 mass%.

Furthermore, 20 parts by mass of carbon black, 10 parts by mass of a polyimine-based comb-shaped polymer as a dispersant, and isobornyl acrylate as a photopolymerizable compound 1 were weighed out in an amount such that the total amount of all components was 100 parts by mass. The weighed out components were mixed and dispersed for 1 hour using an ultrasonic homogenizer to produce a black dispersion B.

A black dispersion was obtained by mixing these black dispersion A and black dispersion B at a mass ratio of 9:1.

Regarding the production of the ultraviolet-curable black resin composition, each ultraviolet-curable black resin composition was obtained in the same manner as in Example 1 of the present invention, except that the photopolymerizable compound 2, the photopolymerization initiator, and their blending amounts were as shown in Table 1.

(Examples 3 and 4 of the present invention)

Each ultraviolet-curable black resin composition was obtained in the same manner as in Example 1 of the present invention, except that the black dispersion, photopolymerizable compound 1, photopolymerizable compound 2, photopolymerization initiator, and their blending amounts used were as shown in Table 1.

(Example 5 of the present invention)

30 parts by mass of a black pigment primarily composed of zirconium nitride, prepared according to Example 1 in Japanese Unexamined Patent Application, First Publication No. 2019-160829, 3 parts by mass of a polyimine-based comb-shaped polymer as a dispersant (a content of 10 mass% relative to the black pigment), 4.5 parts by mass of trimethylolpropane triacrylate as a photopolymerizable compound 1, and 150 parts by mass of polypropylene glycol monomethyl ether acetate (PGMEA) as a diluent were weighed out. The weighed out components were dispersed and mixed in a bead mill using zirconia beads with a diameter of 0.3 mm for a residence time of 15 minutes to produce a black dispersion.

An ultraviolet-curable black resin composition was obtained in the same manner as in Example 1 of the present invention, except that the black dispersion, photopolymerizable compound 1, photopolymerizable compound 2, photopolymerization initiator, and their blending amounts used were as shown in Table 1.

(Example 6 of the present invention)

20 parts by mass of a black pigment primarily composed of zirconium nitride, prepared according to Example 1 in Japanese Unexamined Patent Application, First Publication No. 2019-160829, 2 parts by mass of a phosphate-based comb-shaped polymer as a dispersant (a content of 10 mass% relative to the black pigment), and isobornyl acrylate as a photopolymerizable compound 1 were weighed out in an amount such that the total amount of all components was 100 parts by mass. The weighed out components were dispersed and mixed in a bead mill using zirconia beads with a diameter of 0.3 mm for a residence time of 15 minutes to produce a black dispersion A. In the obtained black dispersion, the content of zirconium nitride particles is 20 mass%.

Furthermore, 20 parts by mass of titanium black 13M-C (Mitsubishi Materials Electronic Chemicals Co., Ltd.), 10 parts by mass of a polyimine-based comb-shaped polymer as a dispersant, and isobornyl acrylate as a photopolymerizable compound 1 were weighed out in an amount such that the total amount of all components was 100 parts by mass. The weighed out components were mixed, and dispersed and mixed in a bead mill using zirconia beads with a diameter of 0.3 mm for a residence time of 15 minutes to produce a black dispersion B.

A black dispersion was obtained by mixing these black dispersion A and black dispersion B at a mass ratio of 9:1.

Regarding the production of the ultraviolet-curable black resin composition, each ultraviolet-curable black resin composition was obtained in the same manner as in Example 1 of the present invention, except that the photopolymerizable compound 2, the photopolymerization initiator, and their blending amounts were as shown in Table 1.

(Example 7 of the present invention)

An ultraviolet-curable black resin composition was obtained in the same manner as in Example 6 of the present invention, except that the blending ratio of the black dispersion A to the black dispersion B was changed to a mass ratio of 8:2, and the photopolymerizable compound 1, photopolymerizable compound 2, photopolymerization initiator, and their blending amounts used were as shown in Table 1.

(Example 8 of the present invention)

An ultraviolet-curable black resin composition was obtained in the same manner as in Example 1 of the present invention, except that the black dispersion, photopolymerizable compound 1, photopolymerizable compound 2, photopolymerization initiator, and their blending amounts used were as shown in Table 1.

(Comparative Example 1)

An ultraviolet-curable black resin composition was obtained in the same manner as in Example 1 of the present invention, except that the black dispersion, photopolymerizable compound 1, photopolymerizable compound 2, photopolymerization initiator, and their blending amounts used were as shown in Table 2.

(Comparative Example 2)

An ultraviolet-curable black resin composition was obtained in the same manner as in Example 2 of the present invention, except that the blending ratio of the black dispersion A to the black dispersion B was changed to a mass ratio of 7:3.

(Comparative Example 3)

An ultraviolet-curable black resin composition was obtained in the same manner as in Example 1 of the present invention, except that the black dispersion, photopolymerizable compound 1, photopolymerizable compound 2, photopolymerization initiator, and their blending amounts used were as shown in Table 2.

The obtained ultraviolet-curable black resin composition was diluted with butyl carbitol acetate (BCA) to a concentration at which the transmittance at wavelengths of 365 nm and 550 nm was 10% to 90%. The concentration of the black pigment in this diluted solution was 25 mg/kg (mass ppm). This diluted solution was filled into a cell with an optical path length of 1 cm, and the transmittance was continuously measured at a step width of 1 nm across wavelengths from 300 nm to 1000 nm using a spectrophotometer (UH4150, manufactured by Hitachi High-Tech Science Corporation). At this time, a cell filled with BCA is measured in advance, and the transmittance of the ultraviolet-curable black resin composition at each wavelength is measured with the background (baseline) subtracted. From the obtained transmission spectrum, the transmittances at 365 nm and 550 nm were read, and the OD and $\varepsilon$'(365) and $\varepsilon$'(550) at each wavelength were calculated based on Equation (1). The evaluation results are shown in Table 3.

In addition, the obtained ultraviolet-curable black composition was cast into a mold with a diameter of 5 mm and a depth of 2 mm, and then irradiated with ultraviolet light at an intensity of approximately 250 mW/cm$^2$ and a wavelength of 365 nm for 15 seconds (cumulative irradiance of 3750 mJ/cm$^2$) using a spot-type UV-LED irradiator (8332C, manufactured by CCS Inc.) to perform ultraviolet curing. The obtained cured product was removed from the mold, and an uncured liquid portion was wiped off to obtain a black resin cured product.

The OD$_{VIS}$ of the obtained black resin cured product was measured using a transmission densitometer (T5plus, manufactured by Ihara Electronic Industries Co., Ltd.). The OD$_{VIS}$ obtained using this transmission densitometer is a value approximating the OD value defined by ISO 5-3 (2009) visual. The evaluation results are shown in Table 3.

[Table 1]

| | | Ultraviolet-curable black resin composition | | | | | | | | | | |
|---|---|---|---|---|---|---|---|---|---|---|---|---|
| | | Black pigment | | Photopolymerization initiator | | Photopolymerizable compound 1 | | Photopolymerizable compound 2 | | X/Y | Diluent | |
| | | Black pigment | Blending amount X (parts by weight) | Name | Blending amount Y (parts by weight) | Name | Blending amount (parts by weight) | Name | Blending amount (parts by weight) | | Name | Blending amount (parts by weight) |
| Examples of the present invention | 1 | Zirconium nitride | 2 | Bis(2,4,6-trimethylbenzoyl) phenylphosphine oxide | 1 | Benzyl acrylate | 8 | HBERCRYL 450 (Daicel-Allnex Ltd.) | 89 | 2.0 | - | 0 |
| | 2 | Zirconium nitride : carbon black (9:1) | 1 | Bis(2,4,6-trimethylbenzoyl) phenylphosphine oxide | 1 | Isobomyl acrylate | 10 | EBERCRYL 450 (Daicel-Allnex Ltd.) | 88 | 1.0 | - | 0 |
| | 3 | Zirconium nitride | 0.5 | Bis(2,4,6-trimethylbenzoyl) phenylphosphine oxide | 2 | Cyclic trimethylolpropane formal acrylate | 4.5 | EBERCRYL 450 (Daicel-Allnex Ltd.) | 94 | 0.3 | - | 0 |
| | 4 | Zirconium nitride | 5 | 2-Benzyl-2-dimethylamino-1-(4-morpholinophenyl)-butanone-1 | 4 | N.N-Dimethylacrylamide | 20 | EBERCRYL 811 (Daicel-Allnex Ltd.) | 71 | 1.3 | - | 0 |
| | 5 | Zirconium nitride | 30 | 2-Methyl-1-[4-(methylthio)phenyl ]-2-morpholinopropan-1-one | 3 | Trimethylolpropane triacrylate | 3 | CYCLOMER P(ACA) Z250 (Daicel-Allnex Ltd.) | 64 | 10.0 | PGMEA | 150 |
| | 6 | Zirconium nitride : titanium black (9:1) | 1 | Bis(2,4,6-trimethylbenzoyl) phenylphosphine oxide | I | Isobomyl acrylate | 4 | 2-Acryloyloxyethyl phthalate | 94 | 1.0 | - | 0 |
| | 7 | Zirconium nitride : titanium black (8:2) | 2 | 2-benzyl-2-dimethylamino-1-(4-morpholinophenyl)-butanone-1 | 1 | Isobornyl acrylate | 8 | EBERCRYL 870 (Daicel-Allnex Ltd.) | 89 | 2.0 | - | 0 |
| | 8 | Zirconium nitride | 3 | Bis(2,4,6-trimethylbenzoyl) phenylphosphine oxide | 2 | 4-Acryloylmorpholine | 12 | EBERCRYL 450 (Daicel-Allnex Ltd.) | 83 | 1.5 | - | 0 |

[Table 2]

| | | Ultraviolet-curable black resin composition | | | | | | | | | | |
|---|---|---|---|---|---|---|---|---|---|---|---|---|
| | | Black pigment | | Photopolymerization initiator | | Photopolymerizable compound 1 | | Photopolymerizable compound 2 | | X/Y | Diluent | |
| | | Black pigment | Blending amount X (parts by weight) | Name | Blending amount Y (parts by weight) | Name | Blending amount (parts by weight) | Name | Blending amount (parts by weight) | | Name | Blending amount (parts by weight) |
| Comparative Example | 1 | Zirconium nitride | 2.5 | Bis(2,4,6-trimethylbenzoyl) phenylphosphine oxide | 0.2 | Benzyl acrylate | 10 | EBERCRYL 450 (Daicel-Allnex Ltd.) | 87 | 12.5 | - | 0 |
| | 2 | Zirconium nitride : carbon black (7:3) | 1 | Bis(2,4,6-trimethylbenzoyl) phenylphosphine oxide | 1 | Isobornyl acrylate | 10 | EBERCRYL 450 (Daicel-Allnex Ltd.) | 88 | 1.0 | - | 0 |
| | 3 | Zirconium nitride | 1 | Bis(2,4,6-trimethylbenzoyl) phenylphosphine oxide | 5 | Cyclic trimethylol-propane formal ac-rylate | 4 | EBERCRYL 450 (Daicel-Allnex Ltd.) | 90 | 0.2 | - | 0 |

[Table 3]

| | | Ultraviolet-curable black resin composition | | | Black resin cured product |
| --- | --- | --- | --- | --- | --- |
| | | $\varepsilon'(550)$ | $\varepsilon'(365)$ | $\varepsilon'(550)/\varepsilon'(365)$ | $OD_{VIS}$ |
| Examples of the present invention | 1 | 19.7 | 12.1 | 1.6 | 5.3 |
| | 2 | 16.0 | 16.0 | 1.0 | 3.1 |
| | 3 | 12.8 | 11.7 | 1.1 | 3.2 |
| | 4 | 25.1 | 13.1 | 1.9 | 3.4 |
| | 5 | 16.8 | 8.6 | 2.0 | 3.3 |
| | 6 | 12.7 | 10.7 | 1.2 | 4.1 |
| | 7 | 10.5 | 9.8 | 1.1 | 3.4 |
| | 8 | 18.1 | 12.5 | 1.4 | 4.5 |
| Comparative Examples | 1 | 15.5 | 7.2 | 2.2 | 2.7 |
| | 2 | 12.9 | 11.8 | 0.92 | 2.9 |
| | 3 | 9.8 | 12.1 | 0.8 | 2.2 |

In Examples 1 to 8 of the present invention, where a ratio $\varepsilon'(550)/\varepsilon'(365)$ of $\varepsilon'(550)$ for light at a wavelength of 550 nm to $\varepsilon'(365)$ for light at a wavelength of 365 nm is set to a range of 1.00 to 2.00, UV curing of the resin compositions sufficiently proceeded, and the $OD_{VIS}$ exhibited a high value of 3.1 or more.

On the other hand, in Comparative Example 1, where $\varepsilon'(550)/\varepsilon'(365)$ exceeds 2.00 and X/Y also exceeds 10, the responsiveness of the photopolymerization initiator to ultraviolet light was insufficient, and UV curing did not proceed at a sufficient thickness, resulting in an $OD_{VIS}$ value smaller than those of Examples 1 to 8 of the present invention.

In Comparative Examples 2 and 3, where $\varepsilon'(550)/\varepsilon'(365)$ is less than 1.00, the transmittance of ultraviolet light was insufficient, and UV curing did not proceed at a sufficient thickness, resulting in an $OD_{VIS}$ value smaller than those of Examples 1 to 8 of the present invention.

As described above, according to the present invention, it has been confirmed that it is possible to provide an ultraviolet-curable black resin composition having excellent light-shielding properties with respect to visible light and excellent photocurability by ultraviolet light, and a black resin cured product.

INDUSTRIAL APPLICABILITY

The ultraviolet-curable black resin composition of the present invention can be suitably used, for example, as a material for forming black patterns such as black inks for inkjet applications or black resists.

Additionally, the black resin cured product of the present invention which is a cured product of the ultraviolet-curable black resin composition of the present invention can be used as a black matrix for image-forming elements used in display devices such as liquid crystal display devices (displays) or organic EL display devices, or as a light-shielding material in image sensors such as CMOS sensors.

Furthermore, the black resin cured product of the present invention can be used as a material for sealing materials for liquid crystal display elements, black column spacers, partition wall materials for micro-LEDs, semiconductor encapsulants, underfill materials, black pastes for circuit concealment, light-shielding solder resists, ultraviolet-curable black inks, and optical adhesives.

**Claims**

1.　An ultraviolet-curable black resin composition comprising:

　　a black pigment;
　　a photopolymerizable compound; and
　　a photopolymerization initiator,
　　wherein $\varepsilon'(\lambda)$ for light at a wavelength of $\lambda$ nm is defined as $\varepsilon'(\lambda) = OD(\lambda)/(c \times 1)$, where $OD(\lambda)$ is an optical density at the wavelength of $\lambda$ nm, c is a pigment concentration, and 1 is an optical path length, and
　　wherein a ratio $\varepsilon'(550)/\varepsilon'(365)$ of $\varepsilon'(550)$ for light at a wavelength of 550 nm to $\varepsilon'(365)$ for light at a wavelength of 365 nm is set to a range of 1.00 to 2.00.

2. The ultraviolet-curable black resin composition according to claim 1,
wherein the photopolymerizable compound is structured to have a carboxyl group in a repeating unit within a molecule or at a molecular terminal.

3. The ultraviolet-curable black resin composition according to claim 1,
wherein a mass ratio X/Y of a content X of the black pigment to a content Y of the photopolymerization initiator is set to a range of 0.3 to 10.

4. A black resin cured product which is a cured product of the ultraviolet-curable black resin composition according to any one of claims 1 to 3.

5. A material for manufacturing an electronic component, comprising:
at least one or both of the ultraviolet-curable black resin composition according to any one of claims 1 to 3 and a black resin cured product obtained by curing the ultraviolet-curable black resin composition according to any one of claims 1 to 3.

6. An electronic component comprising:
at least one or both of the ultraviolet-curable black resin composition according to any one of claims 1 to 3 and a black resin cured product obtained by curing the ultraviolet-curable black resin composition according to any one of claims 1 to 3.

## INTERNATIONAL SEARCH REPORT

| International application No. |
| --- |
| **PCT/JP2024/009768** |

**A. CLASSIFICATION OF SUBJECT MATTER**

*C08F 2/50*(2006.01)i; *C08K 3/013*(2018.01)i; *C08L 101/00*(2006.01)i; *C08L 101/08*(2006.01)i; *G02B 5/20*(2006.01)i
FI: C08F2/50; C08L101/08; C08K3/013; C08L101/00; G02B5/20 101

According to International Patent Classification (IPC) or to both national classification and IPC

**B. FIELDS SEARCHED**

Minimum documentation searched (classification system followed by classification symbols)

C08F2/50; C08K3/013; C08L101/00; C08L101/08; G02B5/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2019/069609 A1 (FUJIFILM CORPORATION) 11 April 2019 (2019-04-11) claims, paragraphs [0032], [0164], examples | 1-6 |
| A | WO 2019/059359 A1 (TORAY INDUSTRIES, INC.) 28 March 2019 (2019-03-28) entire text | 1-6 |
| A | JP 2020-180036 A (MITSUBIHI MATERIALS ELECTRONIC CHEMICALS CO., LTD.) 05 November 2020 (2020-11-05) entire text | 1-6 |

☐ Further documents are listed in the continuation of Box C.    ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **31 May 2024** | **18 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/009768**

| Patent document cited in search report | | | Publication date (day/month/year) | Patent family member(s) | | | Publication date (day/month/year) |
|---|---|---|---|---|---|---|---|
| WO | 2019/069609 | A1 | 11 April 2019 | KR | 10-2020-0040834 | A | |
| | | | | TW | 201915068 | A | |
| WO | 2019/059359 | A1 | 28 March 2019 | US | 2021/0115219 | A1 | |
| | | | | entire text | | | |
| | | | | CN | 111095044 | A | |
| | | | | KR | 10-2020-0055708 | A | |
| | | | | TW | 201920000 | A | |
| | | | | JP | 2021-167949 | A | |
| JP | 2020-180036 | A | 05 November 2020 | US | 2023/0108923 | A1 | |
| | | | | entire text | | | |
| | | | | WO | 2021/171703 | A1 | |
| | | | | EP | 4095091 | A1 | |
| | | | | TW | 202132211 | A | |
| | | | | CN | 115175871 | A | |
| | | | | KR | 10-2022-0145830 | A | |

Form PCT/ISA/210 (patent family annex) (July 2022)

# EP 4 692 132 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2023056995 A
- JP 2020076794 A
- JP 2019160829 A